# EUROPEAN PATENT SPECIFICATION

(11) **EP 4 610 083 B1**
(45) Date of publication and mention of the grant of the patent: **09.12.2026**
(21) Application number: 25160831.1
(22) Date of filing: 28.02.2025
(51) Int. Cl.: B60K 25/06

(54) **MULTI-COMPONENT AUXILIARY POWER SYSTEM AND WORK VEHICLE**
MEHRKOMPONENTIGES HILFSANTRIEBSSYSTEM UND ARBEITSFAHRZEUG
SYSTÈME D'ALIMENTATION AUXILIAIRE À COMPOSANTS MULTIPLES ET VÉHICULE DE TRAVAIL

(30) Priority: 01.03.2024 US 202463560225 P; 12.02.2025 US 202519051295
(43) Date of publication of application: 03.09.2025
(73) Proprietor: Vanair Manufacturing, Inc., Michigan City IN 46360 (US)
(72) Inventor: KOKOT, Ralph, Crown Point, 46307 (US); JUSTICE, Kai, Wheatfield, 46392 (US)
(74) Representative: Hoyng Rokh Monegier B.V.

(56) References cited:
- US-A1- 20230 049 763
- US-B1- 11 376 958
- US-B2- 10 435 026

## Description

### Background of the invention

The invention generally relates to multi-component auxiliary power systems and to work vehicles including such a multi-component auxiliary power system.

### Description of Related Art

Welder systems for electrical welding, such as arc welding or MIG welding require some electrical power source to provide the electrical power necessary to drive the welding process. Typical welder systems obtain the necessary electrical power directly from an AC or DC power source that has a relatively stable wave form, which requires relatively simple circuity to convert the electrical power received from the power source into the steady wave form needed for the welding process. Such systems are typically limited to very specific functionalities and used at particular locations due to the specific electrical power source needed. However, welders are often used in field environments where specific electrical power sources may be difficult to access and/or lack certain functionalities. Therefore, welding systems are desired that provide additional functionality that may be needed in a field environment and/or are less restricted geographically by access to a specific AC or DC electrical power source.

To provide the added field portability, welding systems are sometimes carried on a work truck. Work trucks are primarily used to perform jobsite work functions. The truck as it comes delivered from the vehicle factory is simply configured to transport people and goods. To provide for more specialized field applications, it is common to modify the basic work truck to convert it from a simple transport vehicle into a specialized work truck. Such converted work trucks are often modified by the integration of additional machinery components, such as generators, welders, and hydraulic cranes onto the truck's frame and/or power and/or control systems. The optimization of components on work trucks typically revolves around several key objectives, including weight reduction, space efficiency, and enhanced uptime, as well as lengthening and/or streamlining maintenance cycles. Prioritizing these goals typically involves minimizing the overall weight of the truck, ensuring efficient space utilization, and increasing operational uptime. Effectively designing to these measures for a specific work truck design can collectively contribute to a more versatile, resource-efficient, and reliable work truck system.

Often, a specialized work truck is equipped with a transmission designed with a power take-off port, which provides a gateway for coupling a gearbox called a power take-off (PTO) to provide a rotational power source that can be coupled with other auxiliary systems via a rotational drive shaft to provide kinetic power to the auxiliary systems. The PTO system enables the direct driving of various machines and/or shafts, providing additional versatility and functionality to standard work trucks. However, PTOs and transmission PTO ports operate within strict constraints of space, torque, angular velocity (e.g., RPM), and power, which can limit the flexibility of their use with regard to the different types and/or number of machines that can draw driving power from the PTO system.

In view of the above, it would be desirable to have a system that can use the energy from a single PTO drive of a work truck and use it for powering a wider variety of different types of machines without having to make significant changes to the system when switching between and/or simultaneously using machines that require different forms of power, such as compressed air power, hydraulic power, and/or electric power.

The following summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later.

In accordance with one aspect of the present invention, provided is a multi-component auxiliary power system. The system comprises a power transfer linkage configured to be coupled to a drive shaft to transmit rotational power from a prime mover to the power transfer linkage. The power transfer linkage includes a first US 11,376,958 B1 discloses a front end accessory drive (PEAD) for a military vehicle. The PEAD includes a first belt, a second belt, multiple accessories, an electric motor-generator, at least one other accessory, and a sprag clutch.

### SUMMARY

The invention is defined in the independent claims rotational power output and a second rotational power output. The system further includes a plurality of different auxiliary power components that are operatively coupled to the power transfer linkage. The power transfer linkage transfers and distributes rotational power from the drive shaft to each of the plurality of auxiliary power components. The plurality of different auxiliary power components comprises a hydraulic pump attached to the power transfer linkage and an air compressor attached to the power transfer linkage.

In accordance with another aspect of the present invention, provided is a multi-component auxiliary power system. The system includes a power transfer linkage configured to be coupled to a rotational power coupling to transmit rotational power from a prime mover to the power transfer linkage. The power transfer linkage includes a first rotational power output and a second rotational power output. The system further includes a plurality of auxiliary power components operatively coupled to the power transfer linkage. The power transfer linkage transfers rotational power from the prime mover to each of the plurality of auxiliary power components. The plurality of auxiliary power components includes an air compressor attached to the power transfer linkage and driven by the first rotational power output of the power transfer linkage, an electric generator attached to the air compressor and driven by a through-shaft of the air compressor, and a hydraulic pump attached to the power transfer linkage and driven by the second rotational power output of the power transfer linkage.

In accordance with another aspect of the present invention, provided is a vehicle including a frame supported by one or more wheels, an engine supported by the frame, a transmission driven by the engine, and a multi-component auxiliary power system supported by the frame. The multi-component auxiliary power system includes a power transfer linkage coupled to a rotational power coupling to transmit rotational power from the engine to the power transfer linkage. The power transfer linkage includes a first rotational power output and a second rotational power output. The multi-component auxiliary power system further includes a plurality of auxiliary power components operatively coupled to the power transfer linkage. The power transfer linkage transfers rotational power from the engine to each of the plurality of auxiliary power components. The plurality of auxiliary power components includes an air compressor attached to the power transfer linkage and driven by the first rotational power output of the power transfer linkage, an electric generator attached to the air compressor and driven by a shaft of the air compressor, and a hydraulic pump attached to the power transfer linkage and driven by the second rotational power output of the power transfer linkage.

According to a nonlimiting aspect of the invention, a multi-component auxiliary power system includes a power transfer linkage, which may be coupled to a rotational power coupling to transmit rotational power from a prime mover to the power transfer linkage. A plurality of different auxiliary power components may be operatively coupled to the power transfer linkage. The power transfer linkage may transfer and distribute rotational power, such as from the prime mover, directly and/or indirectly to each of the plurality of auxiliary power components. At least some of the auxiliary power components may convert the distributed rotational power from the power transfer linkage into a different form of energy.

According to another nonlimiting aspect of the invention, a work vehicle is provided that includes a frame supported by one or more wheels and a prime mover comprising an engine supported by the frame. A multi-component auxiliary power system a described herein may be supported by the frame. The rotational power coupling may transmit rotational power from the prime mover to the power transfer linkage.

Technical aspects of multi-component auxiliary power systems as described above preferably include the ability to provide an improved source of multiple forms of power on a jobsite or other remote location. The multi-component auxiliary power system may be provided in the configuration of a PTO-shaft-driven underdeck all-in-one power system for mounting to a work truck to provide multiple sources and/or types of power at a work site from a single power source in the form of the work truck's primary engine and/or PTO system.

### BRIEF DESCRIPTION OF THE DRAWINGS

The foregoing and other aspects of the invention will become apparent to those skilled in the art to which the invention relates upon reading the following description with reference to the accompanying drawings, in which:
FIG. 1 is a perspective view of a multi-component auxiliary power system according to certain non-limiting aspects of the invention;
FIG. 2 is a side elevation view of the multi-component auxiliary power system;
FIG. 3 is an exploded perspective view of the multi-component auxiliary power system;
FIG. 4 is a perspective view of the multi-component auxiliary power system in an illustrative configuration as a PTO-shaft-driven underdeck all-in-one power system connected to a PTO drive and transmission of a work truck (not shown), and
FIG. 5 shows a vehicle having the multi-component auxiliary power system.

### DETAILED DESCRIPTION OF THE INVENTION

The present invention generally relates to multi-component auxiliary power systems and to work vehicles including such a multi-component auxiliary power system. The present invention will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the present invention. It may be evident, however, that the present invention can be practiced without these specific details. Additionally, other embodiments of the invention are possible and the invention is capable of being practiced and carried out in ways other than as described. The terminology and phraseology used in describing the invention is employed for the purpose of promoting an understanding of the invention and should not be taken as limiting.

As used herein, "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together. Any disjunctive word or phrase presenting two or more alternative terms, whether in the description of embodiments, claims, or drawings, should be understood to contemplate the possibilities of including one of the terms, either of the terms, or both terms. For example, the phrase "A or B" should be understood to include the possibilities of "A" or "B" or "A and B."

In preferred but nonlimiting embodiments, multi-component auxiliary power systems disclosed herein provide one or more mechanically-linked auxiliary power components, as nonlimiting examples, one or more air compressors, electric generators for welding and/or providing battery power, and/or hydraulic pumps, which are mechanically linked with each other by one or more mechanical power transfer mechanisms. Such a power system is configured to receive mechanical energy from a single primary rotary power source and distribute the power to one or more various auxiliary power components, which can transform the energy into a variety of different power types, such as compressed air power, hydraulic power, mechanical kinetic power, and/or electric power, for use by a variety of different types of power machinery. The multi-component auxiliary power system is configured to receive rotary kinetic energy from a primary rotary power source, such as a drive shaft driven by a PTO or engine, or similar rotary drive linkage. The multi-component auxiliary power system may optionally include an electric generator that is powered by a through-shaft drive. The components in the multi-component auxiliary power system may be directly coupled with each other, for example by a direct drive shaft coupling, or coupled with each other via other mechanical power transmission mechanisms, such as gears, belts, clutches, and/or additional shafts. The multi-component auxiliary power system may optionally provide an additional power take-off (PTO) port as yet another auxiliary power component. In some nonlimiting embodiments, the system may be configured to provide compressed air at various cubic feet per minute (CFM) and pressure, weld power electric wave forms, jumpstarting electric waveforms, and battery charging electric waveforms, and/or AC and/or DC export power. In some preferred configurations, the multi-component auxiliary power system may be configured specifically to be incorporated into a work truck or similar automotive vehicle with a PTO driven by the vehicle's primary combustion engine or a secondary engine or other power system. The power system can be provided as a single unit with its components fixedly attached to each other, for example with bolts, welds, threads, etc., configured to be attached to and carried by the frame of a work truck underneath the bed deck of the truck so as to free up deck space for other equipment and/or uses.

The integration of various power sources is achieved through the mechanical connection of multiple rotating machines (e.g., auxiliary power components). These machines offer the flexibility to operate independently, collaboratively, and/or in a blended manner, all powered by a single prime mover (e.g., the engine and/or PTO from the work truck). This system simplifies safety systems by enabling a centralized power cut-off. The system also typically streamlines control mechanisms for the various auxiliary power components. The common control scheme throughout the mechanically linked system facilitates seamless interaction with the prime mover, allowing for objectives like speed control and auto start-stop functionality. This unified and interconnected approach enhances both the operational efficiency and safety of multi-component auxiliary power systems incorporating principles of the present disclosure.

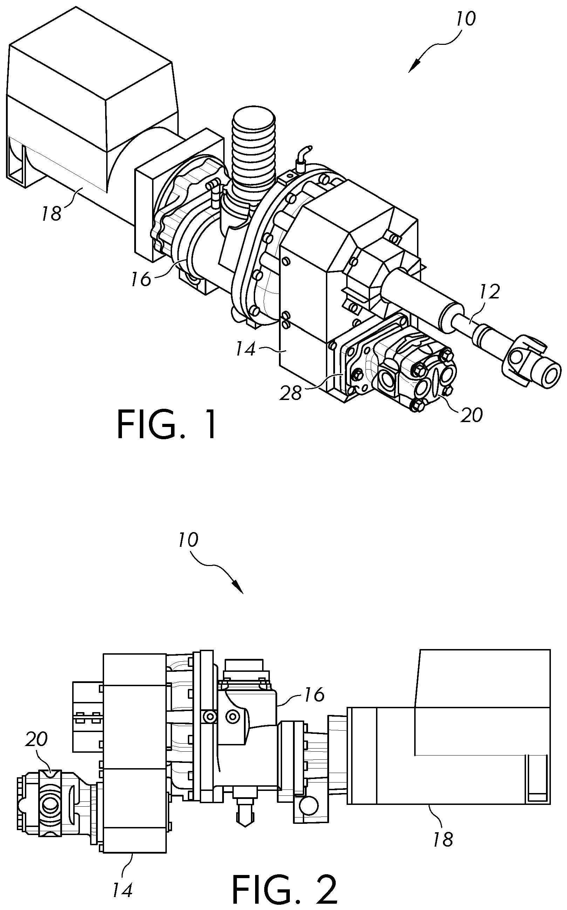

Turning now to the nonlimiting embodiments represented in the drawings, FIGS. 1-4 show a multi-component auxiliary power system 10 (hereinafter, sometimes simply referred to as the "power system") according to an illustrative configuration in accordance with aspects of the invention configured for under deck installation to the frame of a work truck. It is understood, however, that the power system 10 may be installed in other manners and/or on other support configurations and/or other types of use configurations. The power system 10 includes a rotational power coupling, such as a drive shaft 12, a power transfer linkage 14, and a plurality of auxiliary power components operatively coupled with the power transfer linkage 14 such that rotational power from the drive shaft 12 is converted by the power transfer linkage 14 and distributed to any one or more of the auxiliary power components. The auxiliary power components of the power system 10 include a series of mechanically coupled power transforming rotary machines. In the nonlimiting example shown in the drawings, the auxiliary power components include an air compressor 16, an electric generator 18, and a hydraulic pump 20 (collectively also referred to herein as the auxiliary power components 16, 18, and 20). The power system 10 may be referred to as a PTO driven compressor, welder, generator, and hydraulic system. The auxiliary power components 16, 18, and 20 do not necessarily need to be assembled in the order shown in the drawings, but may be arranged in any possible layout as best meets the space needs of a particular use configuration.

Preferably, the driving arrangement is such that that the input and output speed and torque are congruent to what the mating machine is reliably able to receive and/or transmit. In some foreseeable embodiments, the total summation of the power requirements of all the rotating machines in the power system 10 (e.g., auxiliary power components 16, 18, and 20) may be more than the power output of the mechanical driving source (e.g., the truck engine and/or PTO) driving the drive shaft 12 can support. In this case, the auxiliary power components 16, 18, and 20 are preferably configured and controlled in such a fashion as to function within the power limits of the prime mover/primary mechanical driving source, such as the primary or auxiliary engine of a mobile work truck.

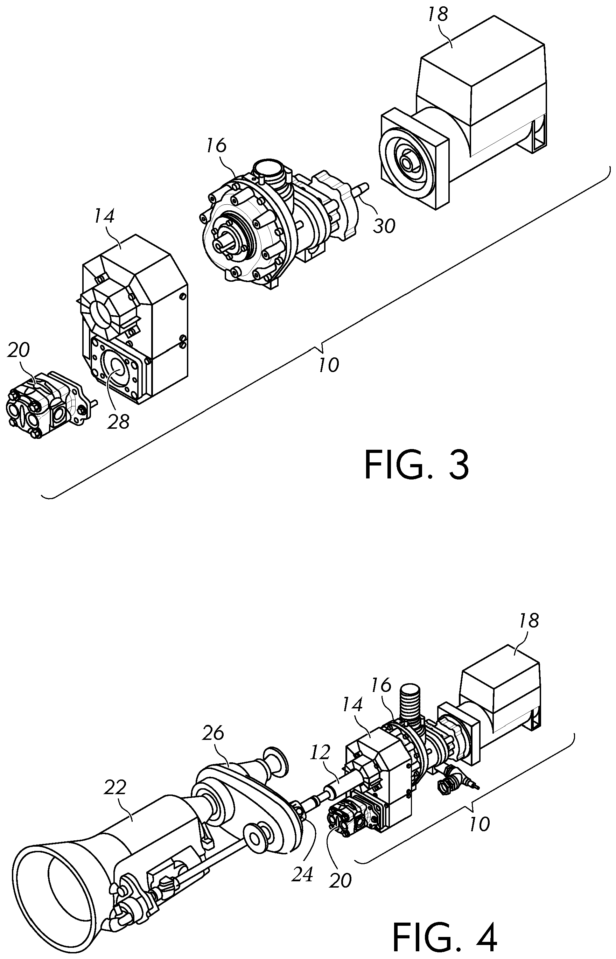

The rotational power coupling between the prime mover and the power transfer linkage 14 may include at least one or more belt drives, gear drives, PTO drives, hydraulic PTO drives, and/or electric PTO drives. In the example shown in FIG.4, the rotational power coupling is the drive shaft 12, which is operatively coupled to the primary mechanical driving source on a mechanical power generation system. For example, the drive shaft 12 is coupled to a PTO port 24 on a work truck, and the mechanical power generation system includes a transmission 22 on the work truck that drives a PTO 26 and the PTO port 24. In this example, the prime mover (primary mechanical energy source) for the system 10 may be either the primary internal combustion engine for the work truck or an auxiliary engine carried by the work truck. However, the power system 10 can be arranged in other installation configurations, and/or other types of prime movers could be used. For example, the power system 10 may be configured for use with a stationary power plant (e.g., a stationary engine on a stationary platform), the power plant on a railroad locomotive, boat, airplane, trailer, etc. The drive shaft 12 may be single part or multi-part. The drive shaft 12 may include any necessary bracketry and/or support mechanisms to ensure proper fitment, alignment, and longevity of the joints. Although a single driveline is shown, the drive shaft 12 in some embodiments might not be used and other types of rotational power couplings could be used to provide a functional auxiliary power system 10. For example, the rotational power coupling could include a direct coupling to the transmission 22 or other rotating power source, a soft coupling, a hydraulic coupling, and/or an electrical coupling to the prime mover or mechanical driving source, depending on the type of primary power source to which the power system 10 is being operatively connected.

The power transfer linkage 14 is configured to transmit the rotational energy from the rotational power supply to one or more different rotationally driven auxiliary power components at transformed power levels and speeds that are appropriate for driving each specific auxiliary power component. The power transfer linkage 14 is coupled to the drive shaft 12 (or other rotational power supply) by any suitable coupling such that the rotational power from the drive shaft 12 is transmitted to the power transfer linkage 14. For example, the power transfer linkage 14 may include a belt drive and/or a gear drive that functions to direct power through its mechanical linkages to the air compressor 16, electric generator 18, and/or hydraulic pump 20. In this particular nonlimiting example configuration, the power transfer linkage 14 includes a first rotational power output on its rear side, and a second rotational power output on its front side, opposite the rear side. Each of the air compressor 16 and the hydraulic pump 20 is directly connected to different rotational power couplings on the power transfer linkage 14, and the electric generator 18 is directly connected to the air compressor. For example, the air compressor 16 is attached to the power transfer linkage 14 and driven by the first rotational power output of the power transfer linkage, and the hydraulic pump 20 is attached to the power transfer linkage and driven by the second rotational power output of the power transfer linkage. Thus, the air compressor 16 can be attached to a first (rear) side of the power transfer linkage 14, and the hydraulic pump 20 can be attached to a second (front) side of the power transfer linkage that is opposite the first side.

The power transfer linkage 14 may provide torque reduction, torque increase, and/or rotation directional change from the drive shaft 12 to provide the appropriate transformed power to the respective auxiliary power component. The power transfer linkage 14 can be used to configure the power system 10 to convert the mechanical rotational energy provided by a single power source (e.g., the "prime mover"), such as the primary engine of the work truck, to provide one or more different types of drives, including for example, a belt drive, a PTO drive, a hydraulic PTO drive, and/or an electric PTO drive. In the optional configuration shown in the drawings, the power transfer linkage 14 includes a PTO pad 28 to provide an alternate drive option. The PTO pad 28 can be used to power the hydraulic pump 20 or a drive belt, gearbox, or other rotary equipment. One possible power transfer linkage is a PowerTech San-Gear gearbox, although other types of gear boxes and transmissions could be used.

The air compressor 16 is driven by a drive coupling on the power transfer linkage 14. In this example, the air compressor 16 is directly attached to another PTO pad on the rear side of the power transfer linkage opposite the drive shaft 12, for example with bolts or other fasteners or welds, and coupled to another PTO drive. The air compressor 16 includes a through shaft 30 that in turn provides rotational power to the electric generator 18. The air compressor 16 may be a rotary screw compressor, piston type compressor, or other type of air compressing machine. The air compressor 16 may be geared or ungeared. In some configurations, the air compressor 16 can be used as a mounting point for the power system 10 to affix to the frame rail of an automobile, such as a work truck, tractor, or construction vehicle, or other framed application, such as a railroad car or locomotive, a truck trailer, a boat, an aircraft frame, or other support structure. In some preferred embodiments, the air compressor 16 is configured to build positive displacement pressure. In one embodiment, the air compressor is a Genair rotary screw air compressor, available from Vanair Manufacturing, Inc.; however other types of air compressors could be used.

The electric generator 18 includes a dynamo that converts rotational energy into electrical energy. In this example, the electric generator 18 is attached directly to the rear side of the air compressor 16 opposite the power transfer linkage 14, for example with bolts, screws, and/or welds, and receives power from the through shaft 30 of the electric generator 18. In other possible configurations, the electric generator 18 may be powered by a belt drive or other type of linkage to the air compressor 16 or from a direct connection to the power transfer linkage 14. In some nonlimiting embodiments, the electric generator 18 is configured to provide one or both of AC and/or DC electrical power suitable for powering various electrical loads, such as lights, tools, welders, battery chargers and/or jumpers, or other electrical equipment. The electric generator 18 may include any suitable power generation and/or control circuits desired for a particular application. In one example arrangement, the electric generator 18 includes one or more of a welding machine, AC electrical power generation, and/or a battery charging machine. The electric generator 18 can be permanently excited or controlled via external field manipulations.

The electric generator 18 can be arranged to provide nearly any typical type of electrical power needed. For example, the electric generator 18 may be configured to provide one or both of single-phase or three-phase power, 50 Hz or 60 Hz frequency output, and single- or multi-voltage such as (but not limited to) 120V, 240V, 208V, or 480V. Other output configurations are also possible depending on the needed application.

The electric generator 18 optionally may include a battery charger system. Preferably such a battery charger system is configured to support multiple charging algorithms that include algorithms configured to charge lead acid, lithium, and/or acting capacitors so that the battery charging function can be used in a variety of voltage source and current source methods. For example, the battery charger system may provide export power using battery charging profiles including lithium chemistry and/or lead acid chemistry. The battery charger system may provide export power that can be used directly for battery charging and/or can be used in conjunction with external power conversion and charging circuits for battery charging.

The electric generator 18 optionally may optionally include a jump-starting system using starter motor voltage. The jump-starting system preferably provides export power that can be used for directly jumpstarting a vehicle, such as a car, truck, boat, tractor, construction equipment, etc. In some embodiments, the jump-starting system may provide export power that can be used in conjunction with super capacitors and/or other power storage methods or chopper board technology for producing an advanced wave form and voltage manipulation.

The electric generator 18 optionally may optionally include a welding machine. The welding machine preferably is configured to provide welding wave form manipulation that occurs via field manipulation and or the manipulation of a chopper circuit, which may include a large addition of inductance and capacitance. Of course, other configurations for the electric generator 18 are also possible.

In the present example, the power transfer linkage 14, air compressor 16, electric generator 18, and hydraulic pump 20 are all fixedly attached with each other, for example with bolts, screws, and/or other types of fasteners, so as to provide a single unit that can be attached to a support, such as the frame of the work truck, at a single location. For example, in the illustrated configuration, the air compressor 16 is configured to be mounted to the frame of the work truck with appropriate fasteners and/or welds, and the remaining components are supported by the air compressor without having to be individually attached to the frame for support. This unitary configuration can provide easier installation and/or removal, for example, for maintenance, and minimizes the need for modifications to the frame of the truck. However, in other configurations, the components could be supported and/or connected with each other directly or indirectly in different arrangements, and the power system 10 is not limited to the exact arrangement, number, or types of components illustrated in the drawings.

The power system 10 according to some nonlimiting aspects of the present invention can take energy from a single PTO drive of a work truck and use it for powering a wider variety of different types of machines by means of the integration of various forms of rotating power. This innovative approach addresses multiple facets of design optimization discussed above, which typically results in cost reduction, weight optimization, decreased maintenance complexity by reducing multiple prime movers, and/or creation of additional space on the vehicle (e.g., a specialized work truck). This integration can in some configurations both enhance the power efficiency of the work truck and expand its cargo capacity relative to work trucks that are configured according to conventional methods to provide the same various power sources. Moreover, the reduction in fuel consumption during transport of the work truck improves the ecological sustainability and economic benefits of this combination of rotating power sources.

A work truck for jobsite maintenance, infrastructure, and emergency response purposes (among others) incorporating a power system 10 as disclosed herein has the benefit of being able to provide multiple forms of power on a jobsite. For example, when configured as a PTO shaft driven underdeck power system 10 as shown in FIG. 4, the power system 10 advantageously provides a streamlined system that can replace up to six separate pieces of equipment on a work truck. This configuration can provide additional bed space, enhanced maneuverability, reduced maintenance requirements, freed hitch, and/or an overall reduction in weight of the work truck to which it is attached, which is highly desirable on many job sites. Such configuration can seamlessly integrate beneath the vehicle chassis, opening cargo space while enhancing overall efficiency.

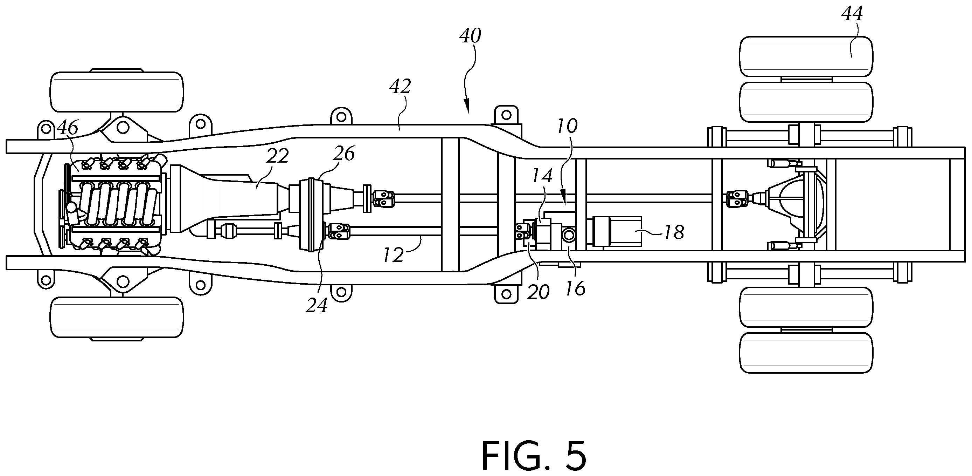

Figure 5 shows a vehicle 40, such as a work truck, having the power system 10 discussed herein. The vehicle 40 can include a frame 42 or other chassis structure supported by a plurality of wheels 44. The vehicle has an engine 46 that is coupled to a transmission 22, and the transmission drives the PTO 26. In an example embodiment, the air compressor of the power system 10 is directly attached to the frame 42, and the air compressor supports the power transfer linkage, the hydraulic pump, and the electric generator without such components having to be individually attached to the frame for support. This unitary configuration can provide easier installation and/or removal, for example, for maintenance, and minimizes the need for modifications to the frame 42 of the vehicle.

## Claims

1. A multi-component auxiliary power system (10) comprising:
a power transfer linkage (14) configured to be coupled to a drive shaft (12) or coupled to a rotational power coupling, to transmit rotational power from a prime mover to the power transfer linkage, wherein the power transfer linkage includes a first rotational power output and a second rotational power output; and
a plurality of, preferably different, auxiliary power components (16,18,20) that are operatively coupled to the power transfer linkage, wherein the power transfer linkage transfers, and preferably distributes, rotational power from the drive shaft and/or the prime mover to each of the plurality of auxiliary power components; and
wherein the plurality of, preferably different, auxiliary power components (16,18,20) comprises:
a hydraulic pump (20) attached to the power transfer linkage; and
an air compressor (16) attached to the power transfer linkage
**characterized in that** the multi-component auxiliary power system (10) further comprises an electric generator (18) attached to the air compressor and driven by a through-shaft of the air compressor.

2. The multi-component auxiliary power system of claim 1, wherein the power transfer linkage includes a first power take-off pad and a second power take-off pad, and further wherein the air compressor is attached to the first power take-off pad and the hydraulic pump is attached to the second power take-off pad.

3. The multi-component auxiliary power system of claim 2, wherein the air compressor is attached to a first side of the power transfer linkage and the hydraulic pump is attached to a second side of the power transfer linkage opposite the first side.

4. The multi-component auxiliary power system of claim 1, wherein the air compressor is configured to generate positive displacement air pressure when driven by the first rotational power output.

5. The multi-component auxiliary power system of any of the preceding claims, wherein the air compressor is driven by the first rotational output of the power transfer linkage and the hydraulic pump is driven by the second rotational power output of the power transfer linkage.

6. The multi-component auxiliary power system of any of the preceding claims, wherein the electric generator comprises a battery charger system that generates export power in at least one power profile configured for charging a battery.

7. The multi-component auxiliary power system of claim 6, wherein the at least one power profile is configured for charging a battery with lithium chemistry or for charging a battery with lead acid chemistry.

8. A vehicle (40), comprising:
a frame (42) supported by one or more wheels (44);
an engine (46) supported by the frame;
a transmission (22) driven by the engine; and
supported by the frame, the multi-component auxiliary power system according to any of the previous claims.

9. Vehicle according to claim 8, wherein the power transfer linkage is coupled to the rotational power coupling to transmit rotational power from the engine to the power transfer linkage, and transfers rotational power from the engine to each of the plurality of auxiliary power components,
wherein the air compressor is driven by the first rotational power output of the power transfer linkage;
wherein an electric generator is attached to the air compressor and driven by a shaft of the air compressor, and
wherein the hydraulic pump is driven by the second rotational power output of the power transfer linkage.

10. Vehicle of claim 8 or 9, wherein the air compressor is mounted to the frame.

11. Vehicle of claim 9, wherein the electric generator comprises a battery charger system that generates export power in at least one power profile configured for charging a battery.

## Patentansprüche

1. Ein Mehrkomponenten-Hilfsantriebssystem (10), umfassend:
eine Leistungsübertragungsverbindung (14), die dazu konfiguriert ist, mit einer Antriebswelle (12) gekoppelt oder mit einer Rotationsleistungkopplung gekoppelt zu sein, um Rotationsleistung von einer Antriebsmaschine an die Leistungsübertragungsverbindung zu übertragen, wobei die Leistungsübertragungsverbindung einen ersten Rotationsleistungsausgang und einen zweiten Rotationsleistungsausgang enthält; und
eine Vielzahl von, vorzugsweise unterschiedlichen, Hilfsantriebskomponenten (16, 18, 20), die funktional mit der Leistungsübertragungsverbindung gekoppelt sind, wobei die Leistungsübertragungsverbindung Rotationsleistung von der Antriebswelle und/oder der Antriebsmaschine an jede der Vielzahl von Hilfsantriebskomponenten überträgt und vorzugsweise verteilt; und
wobei die Vielzahl von, vorzugsweise unterschiedlichen, Hilfsantriebskomponenten (16, 18, 20) umfasst:
eine Hydraulikpumpe (20), die an der Leistungsübertragungsverbindung angebracht ist; und einen Luftkompressor (16), der an der Leistungsübertragungsverbindung angebracht ist, **dadurch gekennzeichnet, dass** das Mehrkomponenten-Hilfsantriebssystem (10) ferner einen elektrischen Generator (18) umfasst, der an dem Luftkompressor angebracht ist und durch eine Durchgangswelle des Luftkompressors angetrieben wird.

2. Mehrkomponenten-Hilfsantriebssystem nach Anspruch 1, wobei die Leistungsübertragungsverbindung einen ersten Leistungabtriebsanschluss und einen zweiten Leistungabtriebsanschluss enthält, und wobei ferner der Luftkompressor an dem ersten Leistungabtriebsanschluss angebracht ist und die Hydraulikpumpe an dem zweiten Leistungabtriebsanschluss angebracht ist.

3. Mehrkomponenten-Hilfsantriebssystem nach Anspruch 2, wobei der Luftkompressor an einer ersten Seite der Leistungsübertragungsverbindung angebracht ist und die Hydraulikpumpe an einer zweiten Seite der Leistungsübertragungsverbindung gegenüber der ersten Seite angebracht ist.

4. Mehrkomponenten-Hilfsantriebssystem nach Anspruch 1, wobei der Luftkompressor dazu konfiguriert ist, positiven Verdrängungsluftdruck zu erzeugen, wenn er durch den ersten Rotationsleistungsausgang angetrieben wird.

5. Mehrkomponenten-Hilfsantriebssystem nach einem der vorhergehenden Ansprüche, wobei der Luftkompressor durch den ersten Rotationsausgang der Leistungsübertragungsverbindung angetrieben wird und die Hydraulikpumpe durch den zweiten Rotationsleistungsausgang der Leistungsübertragungsverbindung angetrieben wird.

6. Mehrkomponenten-Hilfsantriebssystem nach einem der vorhergehenden Ansprüche, wobei der elektrische Generator ein Batterieladesystem umfasst, das Ausgabeleistung in mindestens einem Leistungsprofil erzeugt, das zum Laden einer Batterie konfiguriert ist.

7. Mehrkomponenten-Hilfsantriebssystem nach Anspruch 6,
wobei das mindestens eine Leistungsprofil zum Laden einer Batterie mit Lithiumchemie oder zum Laden einer Batterie mit Blei-Säure-Chemie konfiguriert ist.

8. Fahrzeug (40), umfassend:
einen Rahmen (42), der von einem oder mehreren Rädern (44) getragen wird; einen Motor (46), der von dem Rahmen getragen wird; ein Getriebe (22), das von dem Motor angetrieben wird; und
das von dem Rahmen getragene Mehrkomponenten-Hilfsantriebssystem nach einem der vorhergehenden Ansprüche.

9. Fahrzeug nach Anspruch 8, wobei die Leistungsübertragungsverbindung mit der Rotationsleistungkopplung gekoppelt ist, um Rotationsleistung von dem Motor an die Leistungsübertragungsverbindung zu übertragen, und Rotationsleistung von dem Motor an jede der Vielzahl von Hilfsantriebskomponenten überträgt,
wobei der Luftkompressor durch den ersten Rotationsleistungsausgang der Leistungsübertragungsverbindung angetrieben wird;
wobei ein elektrischer Generator an dem Luftkompressor angebracht ist und durch eine Welle des Luftkompressors angetrieben wird; und
wobei die Hydraulikpumpe durch den zweiten Rotationsleistungsausgang der Leistungsübertragungsverbindung angetrieben wird.

10. Fahrzeug nach Anspruch 8 oder 9, wobei der Luftkompressor an dem Rahmen montiert ist.

11. Fahrzeug nach Anspruch 9, wobei der elektrische Generator ein Batterieladesystem umfasst, das Ausgabeleistung in mindestens einem Leistungsprofil erzeugt, das zum Laden einer Batterie konfiguriert ist.

## Revendications

1. Système d'alimentation auxiliaire à composants multiples (10) comprenant :
un mécanisme de transmission de puissance (14) configuré pour être accouplé à un arbre d'entraînement (12) ou accouplé à un accouplement de puissance rotative, afin de transmettre une puissance rotative d'une machine motrice primaire au mécanisme de transmission de puissance, dans lequel le mécanisme de transmission de puissance inclut une première sortie de puissance rotative et une deuxième sortie de puissance rotative ; et
une pluralité de composants de puissance auxiliaire (16, 18, 20), de préférence différents, qui sont accouplés fonctionnellement au mécanisme de transmission de puissance, dans lequel le mécanisme de transmission de puissance transfère, et de préférence répartit, une puissance rotative de l'arbre d'entraînement et/ou de la machine motrice primaire à chacun de la pluralité de composants de puissance auxiliaire ; et
dans lequel la pluralité de composants de puissance auxiliaire (16, 18, 20), de préférence différents, comprend :
une pompe hydraulique (20) fixée au mécanisme de transmission de puissance ; et
un compresseur d'air (16) fixé au mécanisme de transmission de puissance,
**caractérisé en ce que** le système d'alimentation auxiliaire à composants multiples (10) comprend en outre un générateur électrique (18) fixé au compresseur d'air et entraîné par un arbre traversant du compresseur d'air.

2. Système d'alimentation auxiliaire à composants multiples selon la revendication 1, dans lequel le mécanisme de transmission de puissance inclut une première embase de prise de force et une deuxième embase de prise de force, et dans lequel, en outre, le compresseur d'air est fixé à la première embase de prise de force et la pompe hydraulique est fixée à la deuxième embase de prise de force.

3. Système d'alimentation auxiliaire à composants multiples selon la revendication 2, dans lequel le compresseur d'air est fixé à un premier côté du mécanisme de transmission de puissance et la pompe hydraulique est fixée à un deuxième côté du mécanisme de transmission de puissance opposé au premier côté.

4. Système d'alimentation auxiliaire à composants multiples selon la revendication 1, dans lequel le compresseur d'air est configuré pour générer une pression d'air par déplacement positif lorsqu'il est entraîné par la première sortie de puissance rotative.

5. Système d'alimentation auxiliaire à composants multiples selon l'une quelconque des revendications précédentes, dans lequel le compresseur d'air est entraîné par la première sortie rotative du mécanisme de transmission de puissance et la pompe hydraulique est entraînée par la deuxième sortie de puissance rotative du mécanisme de transmission de puissance.

6. Système d'alimentation auxiliaire à composants multiples selon l'une quelconque des revendications précédentes, dans lequel le générateur électrique comprend un système de charge de batterie qui génère une puissance d'exportation selon au moins un profil de puissance configuré pour charger une batterie.

7. Système d'alimentation auxiliaire à composants multiples selon la revendication 6, dans lequel l'au moins un profil de puissance est configuré pour charger une batterie à chimie au lithium ou pour charger une batterie à chimie au plomb-acide.

8. Véhicule (40), comprenant :
un châssis (42) supporté par une ou plusieurs roues (44) ;
un moteur (46) supporté par le châssis ;
une transmission (22) entraînée par le moteur ; et
supporté par le châssis, le système d'alimentation auxiliaire à composants multiples selon l'une quelconque des revendications précédentes.

9. Véhicule selon la revendication 8, dans lequel le mécanisme de transmission de puissance est accouplé à l'accouplement de puissance rotative afin de transmettre une puissance rotative du moteur au mécanisme de transmission de puissance, et transfère une puissance rotative du moteur à chacun de la pluralité de composants de puissance auxiliaire,
dans lequel le compresseur d'air est entraîné par la première sortie de puissance rotative du mécanisme de transmission de puissance ;
dans lequel un générateur électrique est fixé au compresseur d'air et entraîné par un arbre du compresseur d'air, et
dans lequel la pompe hydraulique est entraînée par la deuxième sortie de puissance rotative du mécanisme de transmission de puissance.

10. Véhicule selon la revendication 8 ou 9, dans lequel le compresseur d'air est monté sur le châssis.

11. Véhicule selon la revendication 9, dans lequel le générateur électrique comprend un système de charge de batterie qui génère une puissance d'exportation selon au moins un profil de puissance configuré pour charger une batterie.
